# EUROPEAN PATENT APPLICATION

(11) **EP 1 566 565 A1**
(43) Date of publication of application: **24.08.2005**
(21) Application number: 03811945.9
(22) Date of filing: 27.11.2003
(51) Int. Cl.: F16F 15/02

(54) **COMPOSITE VIBRATION DAMPER**

(30) Priority: 27.11.2002 JP 2002334700
(71) Applicant: ASAHI RUBBER CO., LTD., Tokyo, 104-0032 (JP); East Japan Railway Company, Tokyo 151-8578 (JP); C.I. Kasei Co., Ltd., Tokyo 104-8321 (JP)
(72) Inventor: MURAKAMI, Masayuki, c/o Asahi Rubber Co., Ltd., Ohsato-gun, Saitama 369-1242 (JP); KASAI, Chikashi, c/o Asahi Rubber Co., Ltd., Ohsato-gun, Saitama 369-1242 (JP); HAMAOKA, Yasuyuki, c/o Asahi Rubber Co., Ltd., Ohsato-gun, Saitama 369-1242 (JP); TOMIYA, Hitoshi, c/o Asahi Rubber Co., Ltd., Ohsato-gun, Saitama 369-1242 (JP); TAKIKAWA, Mitsunobu, East Japan Railway Company, Tokyo 151-8578 (JP); ODAKA, Tatsuo, c/o East Japan Railway Company, Tokyo 151-8578 (JP); KOBAYASHI, Masato, c/o C.I. Kasei Company, Limited, Tokyo 104-8321 (JP); SATO, Hitoshi, c/o C.I. Kasei Company, Limited, Tokyo 104-8321 (JP)
(74) Representative: Rupp, Christian
(86) International application number: PCT/JP2003/015163
(87) International publication number: WO 2004/048803

(57) **Abstract**

A composite vibration damper comprises a magnetic attractive layer, a viscoelastic material layer and a constraining layer laminated in this order, and is used by being fixed on a surface to be fixed by magnetic force of the magnetic attractive layer. The thickness of the viscoelastic material layer is 1 mm or more, and is greater than the thickness of the constraining layer, whereby an excellent vibration damping effect can be exhibited over a wide temperature range.

## Description

### Technical Field

The present invention relates to a composite vibration damper which is advantageously used to cope with noise and vibration in a vehicle-related structure such as a rail for railway, a railway bridge or a highway bridge.

### Background Art

A large number of vibration dampers to cope with noise and vibration in a vehicle-related structure such as a rail for railway, a railway bridge or a highway bridge have been so far proposed.

As an example thereof, a composite vibration damper has been proposed in which a magnetic material layer made of a rubber magnet or the like, a viscoelastic material layer made of a rubbery adhesive with low viscosity and a constraining layer made of a metal or the like are laminated (for example, JP-A-63-97998).

However, since the foregoing disclosed technique was provided for weight reduction of a composite vibration damper, a vibration damping effect was quite low in a position with very strong vibration, for example, a vehicle-related structure such as a rail for railway, a railway bridge or a highway bridge. Moreover, an effective temperature range for exhibiting a vibration damping effect was limited to quite a narrow range of from -10 to 40°C. Consequently, no satisfactory vibration damping effect was obtained as a composite vibration damper of a vehicle-related structure used also at a high temperature of from 40 to 80°C, such as a rail for railway, a railway bridge or a highway bridge.

Accordingly, the invention aims to provide a composite vibration damper which can exhibit a vibration damping effect in a range of from room temperature to a high temperature.

### Disclosure of the Invention

In order to solve the foregoing problems, the present inventors have assiduously conducted investigations, and have consequently found the following means for resolution.

That is, the composite vibration damper of the invention according to claim 1 is a composite vibration damper which comprises a magnetic attractive layer, a viscoelastic material layer and a constraining layer laminated in this order and which is used by being fixed on a surface to be fixed by magnetic force of the magnetic attractive layer, characterized in that the thickness of the viscoelastic material layer is 1 mm or more and is greater than the thickness of the constraining layer.

The composite vibration damper according to claim 2 is the composite vibration damper according to claim 1, characterized in that the magnetic attractive layer is a flexible magnetic attractive layer which is multipole magnetized and has adherent force (magnetic attractive force) of 50 g/cm² or more to the surface to be fixed.

The composite vibration damper according to claim 3 is the composite vibration damper according to claim 1, characterized in that the thickness of the viscoelastic material layer is from 2 to 10 times that of the constraining layer.

The composite vibration damper according to claim 4 is the composite vibration damper according to claim 1, characterized in that the constraining layer is made of any of a metallic sheet such as a steel sheet, a coated steel sheet, a plated steel sheet, a stainless steel sheet or an aluminum sheet and the like, a ceramic sheet having Young's modulus of 300 Pa or more, a synthetic resin sheet having Young's modulus of 300 Pa or more, and other composite materials such as a laminate steel sheet having Young's modulus of 300 Pa or more , and the thickness thereof is from 50 µm to 18,000 µm.

The composite vibration damper according to claim 5 is the composite vibration damper according to claim 1, characterized in that the maximum energy product (BHmax) of the magnetic attractive layer is 0.7 MGOe or more.

The composite vibration damper according to claim 6 is the composite vibration damper according to claim 1, characterized in that the viscoelastic material layer is made of a butyl rubber having viscosity, and its thickness is from 1.5 mm to 25 mm.

The composite vibration damper according to claim 7 is the composite vibration damper according to claim 6, characterized in that an acicular filler is incorporated into the butyl rubber.

The composite vibration damper according to claim 8 is the composite vibration damper according to claim 6, characterized in that the magnetic attractive layer, the viscoelastic material layer and the constraining layer are bonded to one another by self-adhesion of the viscoelastic material layer.

The composite vibration damper according to claim 9 is the composite vibration damper according to claim 1, characterized in that a heat-shielding film is adhered to, or a heat-shielding paint is coated on, the outer surface side of the constraining layer of the composite vibration damper.

The composite vibration damper according to claim 10 is the composite vibration damper according to claim 1, characterized in that the composite vibration damper is used in a vehicle-related structure.

The composite vibration damper according to claim 11 is the composite vibration damper according to claim 1, characterized in that the composite vibration damper is used in a rail for railway.

### Brief Description of the Drawings

Fig. 1 is an illustrative sectional view of a composite vibration damper of the invention.
Fig. 2 is an illustrative sectional view of a composite vibration damper of the invention.
Fig. 3 is an illustrative sectional view of a composite vibration damper of the invention.
Fig. 4 is a graph plotting a relation between a temperature and a loss factor in Examples and Comparative Examples.
Fig. 5 is a graph plotting a relation between a temperature and a loss factor in case of varying a penetration rate of a viscoelastic material layer made of a butyl rubber in Examples.
Fig. 6 is a graph plotting a relation between a temperature and a loss factor in case of adding an adhesive to a viscoelastic material layer made of a butyl rubber in Examples.
Fig. 7 is a graph plotting a relation between a temperature and a loss factor in case of varying a thickness of a viscoelastic material layer made of a butyl rubber in Examples.
Figs. 8(a) and 8(b) are illustrative sectional views for illustrating a use condition of a composite vibration damper for a vehicle-related structure in the invention.
Fig. 9 is a perspective view for illustrating a use condition of a composite vibration damper for a vehicle-related structure in the invention.
Fig. 10 is a perspective view for illustrating a use condition of a composite vibration damper for a vehicle-related structure in the invention.

### Best Mode for Carrying Out the Invention

The composite vibration damper of the invention is, as stated above, adopted such that the thickness of the viscoelastic material layer is 1 mm or more which is greater than the thickness of the constraining layer, and the composite vibration damper is used by being fixed on a member to be fixed by the magnetic force of the magnetic attractive layer.

The thickness of the viscoelastic material layer is not particularly limited so long as it is 1 mm or more and greater than the thickness of the constraining layer. In view of the vibration damping effect and the weight reduction, it is preferably from 1.5 to 25 mm, especially preferably from 2 to 20 mm.

It is further preferable that the thickness of the viscoelastic material layer is from 2 to 10 times that of the constraining layer. The reason is as follows. The viscoelastic material layer having the thickness in this range can follow deformation of the magnetic attractive layer when the magnetic attractive layer to a member to be fixed, even if the constraining layer is relatively thick and is hard of deformation. Further, an excellent vibration damping effect can be obtained.

The viscoelasticity of the viscoelastic material is not particularly limited. However, a penetration rate is preferably from 3 to 90. The reason is as follows. When the penetration rate is less than 3, the material is too hard, and the self-adhesion is reduced. When the penetration rate exceeds 90, it is difficult to retain the shape. When the penetration rate is set at from 10 to 60 in the foregoing range, a higher vibration damping effect is obtained at room temperature. Thus, it is preferable.

A peak loss factor of the viscoelastic material layer is preferably 0.5 or more.

As a material constituting the viscoelastic material layer, for example, unvulcanized or partially vulcanized rubber materials containing, as required, a softening agent or the like can be used. Of these, a butyl rubber (IIR) and an ethylene propylene rubber (EPM, EPDM) which are less costly and have weatherability are preferably used. In view of the fact that the viscosity is provided and an adhesive is unnecessary in bonding the magnetic attractive layer and the constraining layer to be described later, the use of a non-crosslinked or partially crosslinked butyl rubber (IIR) is especially preferable. A partially crosslinked butyl rubber can be obtained by adding a small amount of a crosslinking agent to an unvulcanized butyl rubber. Commercial products are also available. Moreover, a non-crosslinked butyl rubber may be used as a partially crosslinked butyl rubber by blending a partially crosslinked rubber therewith.

For example, the viscoelastic material layer can be produced by kneading 100 parts by weight of a butyl rubber, 30 parts by weight of carbon, 30 parts by weight of a tackifier, from 200 to 400 parts by weight of calcium carbonate, 40 parts by weight of mica and from 70 to 120 parts by weight of a softening agent with a (pressure) kneader.

When the butyl rubber is used, it is preferable to incorporate an acicular filler. This is because the acicular filler is rubbed each other to be able to increase the vibration damping effect of the vibration damper. Examples of the acicular filler include wollastonite, potassium titanate, basic magnesium sulfate, sepiolite, zonotonite, aluminum borate and the like. The use of wollastonite or zonotonite among these fillers can increase the vibration damping effect without greatly decreasing the penetration rate of a butyl rubber because the oil absorption amount is small.

The magnetic attractive layer can be formed, for example, by incorporating a binder material into a magnetic powder to form a sheet and then magnetizing it.

Since the magnetic force thereof enhances fixability of the composite vibration damper to a member to be fixed and surely transmits vibration of the member to be fixed on the viscoelastic material layer to be described later, it is preferable that the magnetic attractive layer is multipole magnetized and has adherent force of 50 g/cm² or more to the member to be fixed and flexibility.

Adherent force of the magnetic attractive layer in the invention is defined as follows. A sheet-like magnetic attractive layer is fixed on a flat surface, and an iron member (a surface on which to fix the magnetic attractive layer is 5 cm²) is adhered thereon. The iron member is vertically raised with a load cell at a rate of 100 mm/min. A maximum load per unit area which is exerted at this time is defined as adherent force.

The adherent force of the magnetic attractive layer is, as noted above, 50 g/cm² or more, preferably 80 g/cm² or more, whereby the magnetic attractive layer is partially fixed on a member to be fixed having a curved surface and follows the surface of the member to be fixed along with the viscoelastic material layer by the magnetic force without being pushed. For imparting such an adherent force, it is preferable that the maximum energy product (BHmax) of the magnetic attractive layer is 0.7 MGOe or more.

The thickness of the magnetic attractive layer is not particularly limited. It is preferably from 0.4 to 4.0 mm, especially preferably from 1.0 to 4.0 mm.

As the binder material, a thermoplastic resin material, a rubber (vulcanized rubber) material or a thermoplastic elastomer material can be used.

As the thermoplastic resin material, for example, chlorinated polyethylene, polystyrene, polypropylene, polyamide, polyphenylenesulfone, polybutylene terephthalate, vinyl chloride, an EVA resin (ethylene-vinyl acetate copolymer resin), an epoxy resin and the like are available.

As the rubber (vulcanized rubber) material, for example, a nitrile rubber, a butyl rubber, a natural rubber, an isoprene rubber, an acrylic rubber, a chloride rubber, EPDM and the like are available.

As the thermoplastic elastomer material, for example, styrenic TPE (TPS), olefinic TPE (TPO), vinyl chloride-type TPE, urethane-type TPE (TPU), ester-type TPE (TPEE), polyamide-type TPE, 1,2-polybutadiene-type TPE and the like are available.

When the rubber material such as a butyl rubber is used as the viscoelastic material layer to be described later, a softening agent migrates in the magnetic attractive layer side over the course of time. Accordingly, of the foregoing materials, thermoplastic resin-type chlorinated polyethylene is preferably used.

As the magnetic powder, barium ferrite, strontium ferrite, a neodymium iron-type magnetic powder, a samarium cobalt-type magnetic powder and a samarium iron nitrogen-type magnetic powder are available.

The constraining layer laminated on the viscoelastic material layer is preferably made of any of a metallic sheet such as a steel sheet, a coated steel sheet, a plated steel sheet, a stainless steel sheet or an aluminum sheet and the like, a ceramic sheet having Young's modulus of 300 Pa or more, a synthetic resin sheet having Young's modulus of 300 Pa or more and other composite materials such as a laminate steel sheet having Young' s modulus of 300 Pa or more. When the steel sheet is used, it is preferable to apply Zn-Al-Mg alloy plating for increasing lust-proofing property and adhesion of a viscous layer.

It is preferable that the thickness of the constraining layer is from 50 µm to 18,000 µm. The reason is as follows. When it is less than 50 µm, no satisfactory vibration damping effect is obtained. When it exceeds 18,000 µm, it might be brought into contact with a wheel when stuck to a rail for railway. When a metallic sheet having great weight per unit area is used as the constraining layer, the viscoelastic material layer might not hold the constraining layer. For this reason, its thickness is preferably from 50 µm to 3,000 µm, especially preferably from 100 µm to 2,300 µm. When the thickness of the constraining layer exceeds 3,000 µm, it is preferable to use a synthetic resin sheet as the constraining layer.

Moreover, it is preferable to adhere a heat-shielding film to, or coat a heat-shielding paint on, the outer surface side of the constraining layer. This is because it does not happen that the temperature of the viscoelastic material is increased to decrease the vibration damping property.

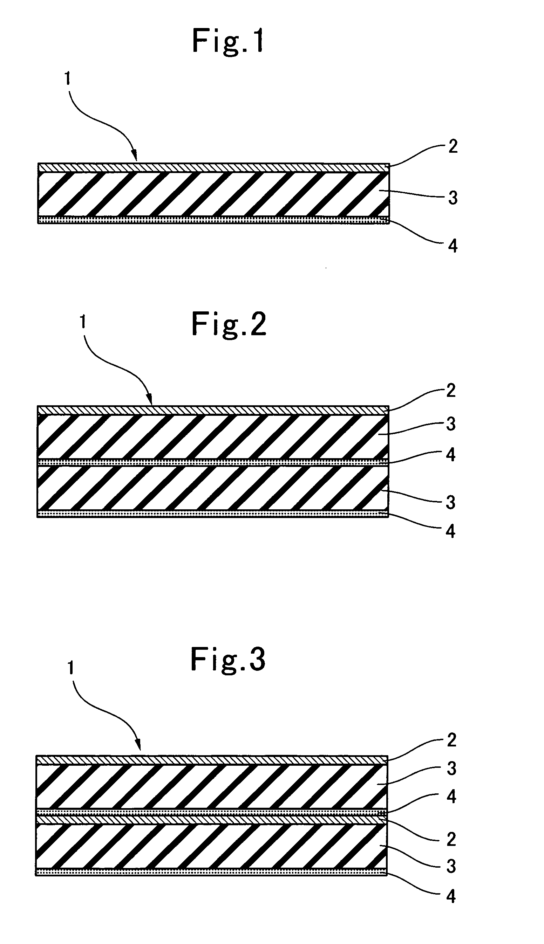

As shown in Fig. 1, one magnetic attractive layer, one viscoelastic material layer and one constraining layer are laminated in this order. By the way, the lamination of one magnetic attractive layer, one viscoelastic material layer and one constraining layer is not critical. As shown in Fig. 2, a magnetic attractive layer 2, a viscoelastic material layer 3, a constraining layer 4, a viscoelastic material layer 3 and a constraining layer 4 are laminated in this order. As shown in Fig. 3, a magnetic attractive layer 2, a viscoelastic material layer 3, a constraining layer 4, a magnetic attractive layer 2, a viscoelastic material layer 3 and a constraining layer 4 are laminated in this order. Thus, a combination of the layers is optional. By the way, in the combination shown in Fig. 3, the magnetic attractive layer 4 and the constraining layer 2 shown in the center of the composite laminate are contacted by magnetic force.

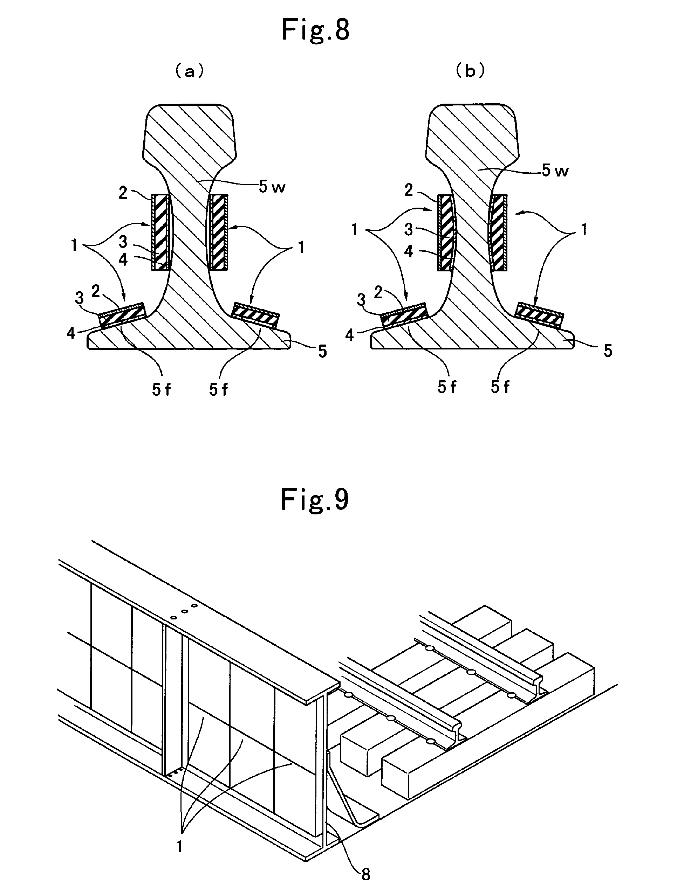

The above-obtained composite vibration damper 1 of the invention is used by being installed, for example, on a web portion 5w of a rail 5 for railway which is a member to be fixed, or on a flange 5f in a lower portion of the rail 5 as shown in Fig. 8. At this time, since the viscoelastic material layer 3 of the composite vibration damper 1 in the invention is adapted to be thicker than the magnetic attractive layer 2, the magnetic attractive layer 4 is pulled to the rail side along with the viscoelastic material layer 3 by only fixing the magnetic attractive layer 4 on the web portion 5w of the rail as shown in Fig. 8(a), and the composite vibration damper is finally fixed along the web surface of the rail 5 as shown in Fig. 8(b). Accordingly, a procedure of fixing the composite vibration damper on a member to be fixed having a curved surface in the rail or the like can be conducted quite easily, and the vibration of the member 5 to be fixed can be transmitted surely to the viscoelastic material layer 3. When the constraining layer has such a thickness that it can be rolled or is made of such a material that it can be rolled, the composite vibration damper can easily be curved to follow a member to be fixed having a greatly curved surface. The composite vibration damper 1 of the invention may be installed on a bottom of a rail for railway between cross ties.

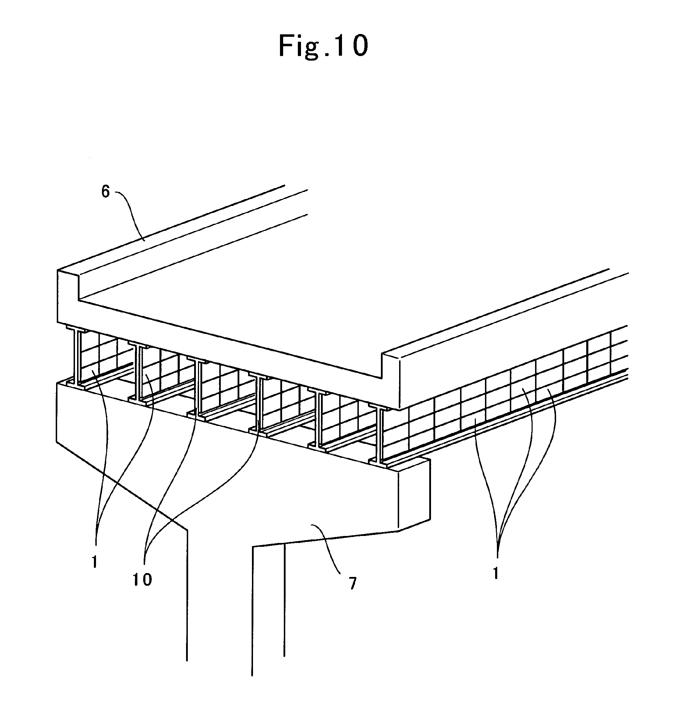

The composite vibration damper of the invention can be used not only by being installed on the rail for railway shown in Fig. 8 but also by being fixed on a side wall 8 on the side of the rail 5 in a railway bridge as shown in Fig. 9 or by being installed on a side surface of a main girder 10 between a road 6 and a bridge pier 7 supporting the road in a highway bridge as shown in Fig. 10. Thus, it can be used in positions with great vibration.

By the way, it is preferable to mount a support by which the composite vibration damper can be pushed from outside the composite vibration damper to the member to be fixed, as required, for increasing fixing stability to the member to be fixed.

### Examples

Examples of the composite vibration damper in the invention are described below, and the vibration damping effect is evaluated using Comparative Examples.

### (Example 1)

In this Example, a flexible sheet (VYNON MAGNET Sheet manufactured by C. I. Kasei, magnetization pitch 5 mm, adherent force 145 g/cm², BHmax 1.0 MGOe) with a thickness of 3.3 mm formed by mixing 88 parts by weight of anisotropic strontium ferrite as a magnetic powder with 12 parts by weight of chlorinated polyethylene as a binder material was used as a magnetic attractive layer. An unvulcanized sheet (penetration rate 35) obtained by kneading 100 parts by weight of a butyl rubber (Exxon Butyl-268 manufactured by Nippon Butyl), 30 parts by weight of carbon (Seast S), 30 parts by weight of a tackifier (Escoretz 1102), 300 parts by weight of calcium carbonate (ground type), 40 parts by weight of mica (S-200) and 100 parts by weight of a softening agent (Polybis 015MN) with a pressure kneader and forming the mixture into a sheet having a thickness of 6.0 mm by an extruder was used as a viscoelastic material layer. A stainless steel sheet (SUS 304) having a thickness of 100 µm was used as a constraining layer. These layers were laminated in the order of the constraining layer, the viscoelastic material layer and the magnetic attractive layer to produce a composite vibration damper having a size of 10 mm x 210 mm. The constraining layer, the viscoelastic material layer and the magnetic attractive layer were press-bonded at room temperature.

### (Example 2)

A composite vibration damper was produced as in Example 1 except that a steel sheet (SPCC-SD) with a thickness of 0.6 mm degreased with a solvent was used as the constraining layer and the thickness of the viscoelastic material layer was 4.0 mm.

### (Example 3)

A composite vibration damper was produced as in Example 1 except that a steel sheet (SPCC-SD) with a thickness of 1.0 mm degreased with a solvent was used as the constraining layer and the thickness of the viscoelastic material layer was 2.0 mm.

### (Example 4)

A composite vibration damper was produced as in Example 1 except that a steel sheet (SPCC-SD) with a thickness of 1.0 mm degreased with a solvent was used as the constraining layer, the thickness of the viscoelastic material layer was 2.0 mm and the thickness of the magnetic attractive layer was 2.0 mm (magnetization pitch 5 mm, adherent force 125 g/cm²).

### (Example 5)

A composite vibration damper was produced as in Example 1 except that a steel sheet (SPCC-SD) with a thickness of 1.0 mm degreased with a solvent was used as the constraining layer and the thickness of the viscoelastic material layer was 6.0 mm.

### (Example 6)

A composite vibration damper was produced as in Example 1 except that a zinc-plated steel sheet with a thickness of 1.6 mm was used as the constraining layer, the thickness of the viscoelastic material layer was 6.0 mm and the thickness of the magnetic attractive layer was 2.0 mm (magnetization pitch 5 mm, adherent force 125 g/cm²).

### (Example 7)

A composite vibration damper was produced as in Example 1 except that a zinc-plated steel sheet with a thickness of 2.0 mm was used as the constraining layer, the thickness of the viscoelastic material layer was 6.0 mm and the thickness of the magnetic attractive layer was 2.0 mm (magnetization pitch 5 mm, adherent force 125 g/cm²).

### (Example 8)

A composite vibration damper was produced as in Example 1 except that a zinc-plated steel sheet with a thickness of 2.0 mm was used as the constraining layer, the thickness of the viscoelastic material layer was 6.0 mm and the thickness of the magnetic attractive layer was 3.0 mm (magnetization pitch 5 mm, adherent force 140 g/cm²).

### (Example 9)

A composite vibration damper was produced as in Example 1 except that an acrylic resin sheet with a thickness of 18 mm was used as the constraining layer, the thickness of the viscoelastic material layer was 20.0 mm and the thickness of the magnetic attractive layer was 2.0 mm (magnetization pitch 5 mm, adherent force 125 g/cm²).

### (Comparative Example 1)

A zinc-plated steel sheet having a thickness of 2.3 mm was used as a constraining layer. An unvulcanized polymeric viscoelastic sheet in which a butyl rubber containing a magnetic powder and a vulcanizing agent with a thickness of 3.0 mm was used as a main component was laminated thereon using a synthetic rubber-type solvent adhesive. The unvulcanized sheet and the adhesive are bonded through a press mold simultaneously with vulcanization. Magnetization was then conducted to form a vibration damper having a performance of BHmax 0.4 MGOe.

### (Comparative Example 2)

A vibration damper was produced as in Example 1 except that a zinc-plated steel sheet with a thickness of 0.6 mm was used as the constraining layer, the thickness of the viscoelastic material layer was 0.6 mm and the thickness of the magnetic attractive layer was 2.0 mm (magnetization pitch 5 mm, adherent force 125 g/cm²).

### (Comparative Example 3)

A vibration damper was produced as in Example 1 except that a zinc-plated steel sheet with a thickness of 1.0 mm was used as the constraining layer, the thickness of the viscoelastic material layer was 0.6 mm and the thickness of the magnetic attractive layer was 2.0 mm (magnetization pitch 5 mm, adherent force 125 g/cm²).

The composite vibration dampers in Examples 1 to 9 and the vibration dampers in Comparative Examples 1 to 3 were measured for a loss factor at a resonance point frequency under temperature conditions of -20°C, 0°C, 20°C, 40°C, 60°C and 80°C.

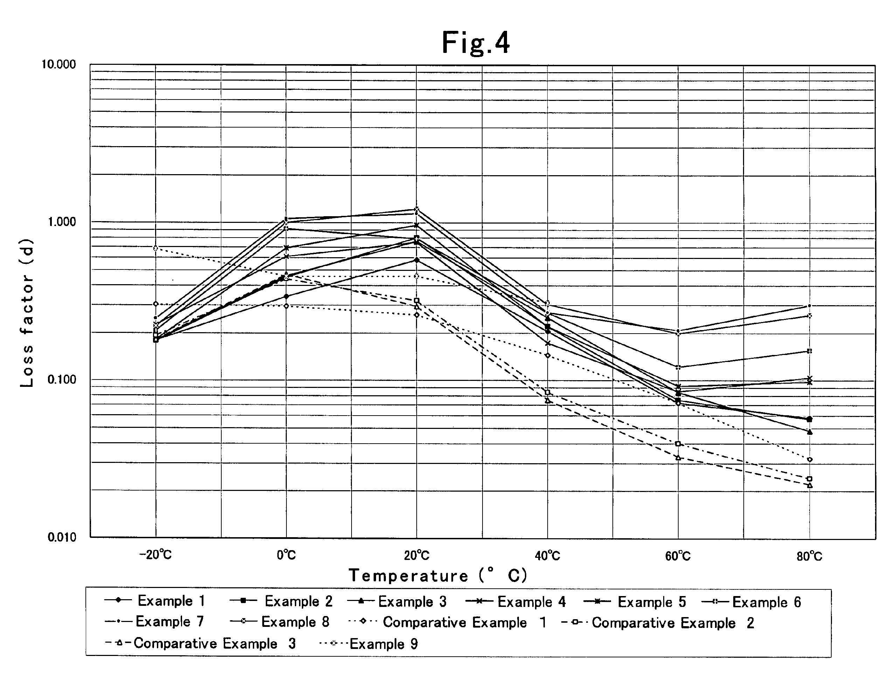

The results of the measurement were shown in Table 1, and the relation thereof was shown in the graph of Fig. 4.

**(Table 1)**

| No. | Structure of a sample | | | Loss factor in 500 Hz vibration at each temperature | | | | | |
|---|---|---|---|---|---|---|---|---|---|
| | Constraining layer | Viscoelastic material layer | Magnetic attractive layer | -20°C | 0°C | 20°C | 40°C | 60°C | 80°C |
| Example1 | 100 µm | 6.0 mm | 3.3 mm | 0.180 | 0.340 | 0.580 | 0.205 | 0.072 | 0.058 |
| Example 2 | 0.6 mm | 4.0 mm | 3.3 mm | 0.178 | 0.450 | 0.800 | 0.220 | 0.075 | 0.057 |
| Example 3 | 1.0 mm | 2.0 mm | 3.3 mm | 0.180 | 0.460 | 0.760 | 0.250 | 0.084 | 0.048 |
| Example 4 | 1.0 mm | 6.0 mm | 2.0 mm | 0.225 | 0.610 | 0.750 | 0.173 | 0.085 | 0.104 |
| Example 5 | 1.0 mm | 6.0 mm | 3.3 mm | 0.182 | 0.690 | 0.960 | 0.220 | 0.092 | 0.098 |
| Example 6 | 1.6 mm | 6.0 mm | 2.0 mm | 0.207 | 0.912 | 0.790 | 0.268 | 0.122 | 0.155 |
| Example 7 | 2.0 mm | 6.0 mm | 2.0 mm | 0.246 | 1.056 | 1.137 | 0.269 | 0.208 | 0.299 |
| Example 8 | 2.0 mm | 6.0 mm | 3.0 mm | 0.221 | 0.998 | 1.213 | 0.303 | 0.199 | 0.259 |
| Example 9 | 18.0 mm | 20.0 mm | 2.0 mm | - | - | 0.680 | 0.456 | 0.458 | 0.311 |
| Comparative Example 1 | 2.3 mm | - | (3.0 mm*) | 0.303 | 0.295 | 0.260 | 0.145 | 0.072 | 0.032 |
| Comparative Example 2 | 0.6 mm | 0.6 mm | 2.0 mm | 0.192 | 0.440 | 0.320 | 0.084 | 0.040 | 0.024 |
| Comparative Example 3 | 1.0 mm | 0.6 mm | 2.0 mm | 0.182 | 0.470 | 0.294 | 0.075 | 0.033 | 0.022 |

| | | | | | | | | | |
|---|---|---|---|---|---|---|---|---|---|
| * Vulcanized magnetic sheet | | | | | | | | | |

The loss factor at each temperature was measured as follows. On a rectangular substrate made of a steel sheet having a thickness of 2.3 mm, each of the samples in Examples 1 to 9 and Comparative Examples 1 to 3 which were formed with the same size as that of the substrate was fixed or bonded by magnetic force alone. Random noise was applied to the center of the substrate from an electrodynamic shaker via an impedance head. From a resonance curve (V/F frequency response function) of mobility (V/F) on the center of the substrate, the loss factor was obtained. The method for measuring the loss factor is also applied to the following Examples.

As is clear also from Table 1 and Fig. 4, it has been found that since the viscoelastic material layer is not thicker than the constraining layer in Comparative Examples 1 to 3, the vibration damping effect is low in a temperature range of from -20 to 80°C, whereas the composite vibration dampers in Examples 1 to 9 are high in vibration damping effect in the same temperature range.

It has been also found that since the thickness of the viscoelastic material layer is from 2 to 10 times that of the constraining layer in Examples 6 to 8, the excellent vibration damping effect is exhibited in the entire temperature range of from 0 to 80°C in comparison to Comparative Examples 1 to 3.

It has been found that in Example 9 the constraining layer is made of a lightweight acrylic resin sheet and its thickness is approximately 1.1 times that of the constraining layer, whereby the excellent vibration damping effect is exhibited in the temperature range of from 20 to 80°C in comparison to Comparative Examples 1 to 3.

Subsequently, each of the composite vibration dampers in Examples 1 to 9 and the dampers in Comparative Examples 1 to 3 was formed into a sample having a size of 70 mm x 225 mm, and the sample was installed on a web portion of a rail for railway. Then, the samples were compared with respect to the following property.

As a result, the composite vibration dampers in Examples 1 to 9 could follow any of the foregoing members to be fixed. Meanwhile, the vibration dampers in Comparative Examples 1 to 3 could not follow them.

Examples in which the viscoelastic material layer of the composite vibration damper is made of a butyl rubber and the penetration rate thereof is varied in the invention are described below.

### (Example 10)

In this Example, a flexible sheet (VYNON MAGNET Sheet manufactured by C. I. Kasei, magnetization pitch 5 mm, adherent force 125 g/cm², BHmax 1.0 MGOe) with a thickness of 2.0 mm formed by mixing 88 parts by weight of anisotropic strontium ferrite as a magnetic powder with 12 parts by weight of chlorinated polyethylene as a binder material was used as a magnetic attractive layer. A partially crosslinked sheet (penetration rate 3.2) obtained by kneading 100 parts by weight of a partially crosslinked butyl rubber (WO-27 manufactured by Elastomix), 10 parts by weight of carbon (Seast S), 50 parts by weight of a tackifier (Escoretz 1102), 60 parts by weight of calcium carbonate (ground type), 240 parts by weight of calcium silicate (wollastonite was used as calcium silicate in this Example and those following) and 50 parts by weight of mica (S-200) with a pressure kneader and forming the mixture into a sheet having a thickness of 6.0 mm by an extruder was used as a viscoelastic material layer. A zinc-plated steel sheet having a thickness of 2 mm was used as a constraining layer. These layers were laminated in the order of the constraining layer, the viscoelastic material layer and the magnetic attractive layer to produce a composite vibration damper having a size of 10 mm x 210 mm. The constraining layer, the viscoelastic material layer and the magnetic attractive layer were press-bonded at room temperature.

### (Example 11)

A composite vibration damper was produced as in Example 10 except that 20 parts by weight of a softening agent (Polybutene HV-100) was added in forming the viscoelastic material layer to give an unvulcanized sheet (penetration rate 10.0).

### (Example 12)

A composite vibration damper was produced as in Example 10 except that 40 parts by weight of a softening agent (Polybutene HV-100) was added in forming the viscoelastic material layer to give an unvulcanized sheet (penetration rate 15.4).

### (Example 13)

A composite vibration damper was produced as in Example 10 except that 110 parts by weight of a softening agent (Polybutene HV-100) was added in forming the viscoelastic material layer to give an unvulcanized sheet (penetration rate 32.8).

### (Example 14)

A composite vibration damper was produced as in Example 10 except that 60 parts by weight of a softening agent (Polybis 015MN) was added in forming the viscoelastic material layer to give an unvulcanized sheet (penetration rate 60.0).

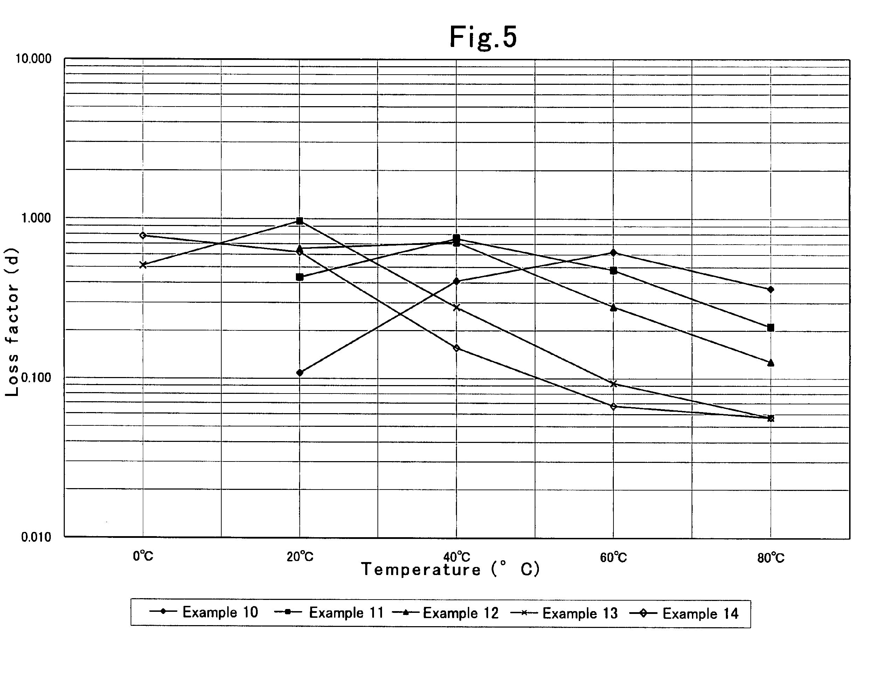

The composite vibration dampers in Examples 10 to 14 were measured for a loss factor at a resonance point frequency under temperature conditions of 0°C, 20°C, 40°C, 60°C and 80°C, and the results are shown in Table 2 and Fig. 5.

**(Table 2)**

| No | Penetration rate of a constraining layer | Loss factor in 500 Hz vibration at each temperature | | | | |
|---|---|---|---|---|---|---|
| . | | 0°C | 20°C | 40°C | 60°C | 80°C |
| Example 10 | 3.2 | - | 0.108 | 0.409 | 0.621 | 0.367 |
| Example 11 | 10.0 | - | 0.432 | 0.751 | 0.479 | 0.211 |
| Example 12 | 15.4 | - | 0.652 | 0.714 | 0.283 | 0.127 |
| Example 13 | 32.8 | 0.511 | 0.965 | 0.280 | 0.093 | 0.057 |
| Example 14 | 60.0 | 0.776 | 0.619 | 0.155 | 0.067 | 0.057 |

From the foregoing results, it has been found that since the composite vibration dampers in Examples 10 to 14 exhibit the vibration damping effect in the wide temperature range, they are appropriate as a vibration damper of a rail for railway. It has been further found that the peak portion of the loss factor can be set at a desired temperature by changing the penetration rate.

Examples of adding an acicular filler to the viscoelastic material layer of the composite vibration damper in the invention are described below.

### (Example 15)

This Example is, for comparison, a composite vibration damper in which a viscoelastic material layer does not contain an acicular filler.

In this Example, a flexible sheet (VYNON MAGNET Sheet manufactured by C. I. Kasei, magnetization pitch 3 mm, adherent force 100 g/cm², BHmax 1.0 MGOe) with a thickness of 1.5 mm formed by mixing 88 parts by weight of anisotropic strontium ferrite as a magnetic powder with 12 parts by weight of chlorinated polyethylene as a binder material was used as a magnetic attractive layer. A partially crosslinked sheet (penetration rate 35) obtained by kneading 100 parts by weight of a partially crosslinked butyl rubber (WO-27 manufactured by Elastomix), 10 parts by weight of carbon (Seast S), 50 parts by weight of a tackifier (Escoretz 1102), 300 parts by weight of calcium carbonate (ground type) and 40 parts by weight of a softening agent (Polybis 015MN) with a pressure kneader and forming the mixture into a sheet having a thickness of 6.0 mm by an extruder was used as a viscoelastic material layer. A zinc-plated steel sheet having a thickness of 1.6 mm was used as a constraining layer. These layers were laminated in the order of the constraining layer, the viscoelastic material layer and the magnetic attractive layer to produce a composite vibration damper having a size of 10 mm x 210 mm. The constraining layer, the viscoelastic material layer and the magnetic attractive layer were press-bonded at room temperature.

### (Example 16)

A composite vibration damper was produced as in Example 15 except that 60 parts by weight of calcium carbonate (ground type) and 240 parts by weight of calcium silicate were used instead of 300 parts by weight of calcium carbonate (ground type) added to the viscoelastic material layer.

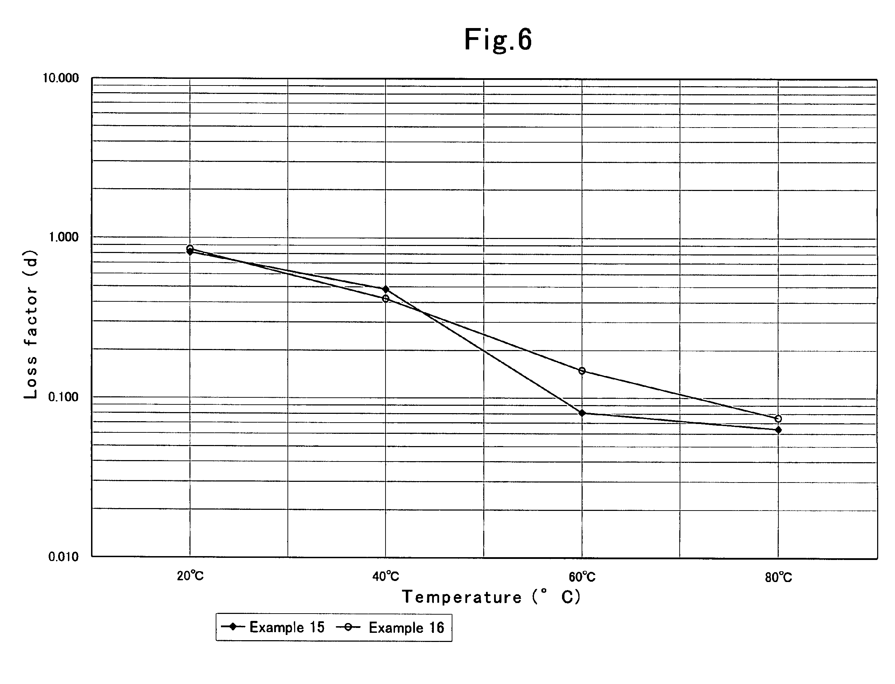

The composite vibration dampers in Examples 15 and 16 were measured for a loss factor at a resonance point frequency under temperature conditions of 20°C, 40°C, 60°C and 80°C, and the results are shown in Table 3 and Fig. 6.

**(Table 3)**

| No. | Additive of a viscoelastic material layer | Loss factor in 500 Hz vibration at each temperature | | | |
|---|---|---|---|---|---|
| | | 20°C | 40°C | 60°C | 80°C |
| Example 15 | Calcium carbonate 300 parts by weight | 0.814 | 0.482 | 0.081 | 0.064 |
| Example 16 | Calcium carbonate 60 parts by weight + calcium silicate 240 parts by weight | 0.849 | 0.421 | 0.149 | 0.075 |

From the foregoing results, it has been found that in Example 16 in which calcium silicate was added to the viscoelastic material layer, the vibration damping effect is high in the temperature range of from 20 to 80°C in comparison to Example 15.

Examples of varying the thickness of the viscoelastic material layer of the composite vibration damper in the invention are described below.

### (Example 17)

In this Example, a flexible sheet (VYNON MAGNET Sheet manufactured by C. I. Kasei, magnetization pitch 5 mm, adherent force 125 g/cm², BHmax 1.0 MGOe) with a thickness of 2.0 mm formed by mixing 88 parts by weight of anisotropic strontium ferrite as a magnetic powder with 12 parts by weight of chlorinated polyethylene as a binder material was used as a magnetic attractive layer. An unvulcanized sheet (penetration rate 35) obtained by kneading 100 parts by weight of a butyl rubber (Exxon Butyl-268 manufactured by Nippon Butyl), 10 parts by weight of carbon (Seast S), 50 parts by weight of a tackifier (Escoretz 1102), 60 parts by weight of calcium carbonate (ground type), 240 parts by weight of calcium silicate, 50 parts by weight of mica (S-200) and 100 parts by weight of a softening agent (Polybis 015MN) with a pressure kneader and forming the mixture into a sheet having a thickness of 15.0 mm by an extruder was used as a viscoelastic material layer. A stainless steel sheet (SUS 304) having a thickness of 2 mm was used as a constraining layer. These layers were laminated in the order of the constraining layer, the viscoelastic material layer and the magnetic attractive layer to produce a composite vibration damper having a size of 20 mm x 300 mm. The constraining layer, the viscoelastic material layer and the magnetic attractive layer were press-bonded at room temperature.

### (Example 18)

A composite vibration damper was produced as in Example 17 except that the thickness of the viscoelastic material layer was 20 mm.

### (Example 19)

A composite vibration damper was produced as in Example 17 except that the thickness of the viscoelastic material layer was 25 mm.

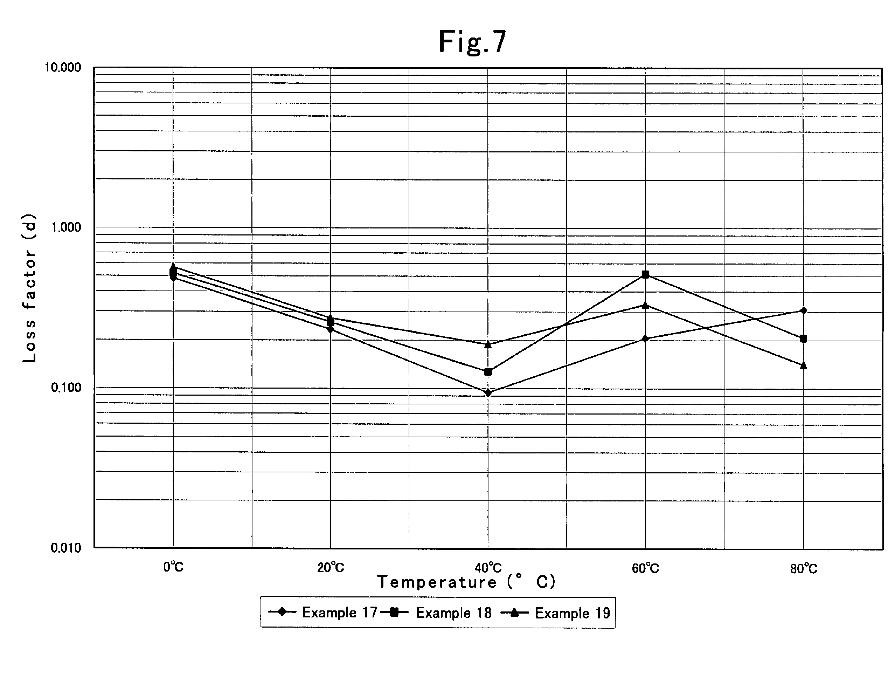

The composite vibration dampers in Examples 17 to 19 were measured for a loss factor at a resonance point frequency under temperature conditions of 0°C, 20°C, 40°C, 60°C and 80°C, and the results are shown in Table 4 and Fig. 7.

**(Table 4)**

| No. | Structure of a sample | | | Loss factor in 500 Hz vibration at each temperature | | | | |
|---|---|---|---|---|---|---|---|---|
| | Con-straining layer | Viscoelastic material layer | Magnetic attractive layer | 0°C | 20°C | 40°C | 60°C | 80°C |
| Example 17 | 2.0 mm | 15.0 mm | 2.0 mm | 0.483 | 0.232 | 0.094 | 0.205 | 0.308 |
| Example 18 | 2.0 mm | 20.0 mm | 2.0 mm | 0.520 | 0.258 | 0.127 | 0.513 | 0.206 |
| Example 19 | 2.0 mm | 25.0 mm | 2.0 mm | 0.566 | 0.273 | 0.188 | 0.332 | 0.140 |

From the foregoing results, it has been found that when the thickness of the viscoelastic material layer is in the range of from 15 to 25 mm, the high vibration damping effect can be exhibited. However, upon comparing Example 18 with Example 19, no great difference is found. Accordingly, in view of the weight reduction, it has been found that the thickness of the viscoelastic material layer which is from 2 to 10 times that of the constraining layer is preferable.

Examples of applying change such as coating to the constraining layer of the composite vibration damper in the invention are described below.

### (Example 20)

This Example is, for comparison, an example of a composite vibration damper obtained by not coating a constraining layer.

In this Example, a flexible sheet (VYNON MAGNET Sheet manufactured by C. I. Kasei, magnetization pitch 3 mm, adherent force 100 g/cm², BHmax 1.0 MGOe) with a thickness of 1.5 mm formed by mixing 88 parts by weight of anisotropic strontium ferrite as a magnetic powder with 12 parts by weight of chlorinated polyethylene as a binder material was used as a magnetic attractive layer. A partially crosslinked sheet (penetration rate 35) obtained by kneading 100 parts by weight of a partially crosslinked butyl rubber (WO-27 manufactured by Elastomix), 10 parts by weight of carbon (Seast S), 50 parts by weight of a tackifier (Escoretz 1102), 60 parts by weight of calcium carbonate (ground type), 240 parts by weight of calcium silicate and 100 parts by weight of a softening agent (Polybis 015MN) with a pressure kneader and forming the mixture into a sheet having a thickness of 6.0 mm by an extruder was used as a viscoelastic material layer. A zinc-plated steel sheet having a thickness of 2.0 mm was used as a constraining layer. These layers were laminated in the order of the constraining layer, the viscoelastic material layer and the magnetic attractive layer to produce a composite vibration damper having a size of 10 mm x 210 mm. The constraining layer, the viscoelastic material layer and the magnetic attractive layer were press-bonded at room temperature.

### (Example 21)

A composite vibration damper was produced as in Example 20 except that only the outside (opposite to the viscoelastic material layer side) of the zinc-plated steel sheet was coated.

### (Example 22)

A composite vibration damper was produced as in Example 20 except that the constraining layer was made of ZAM (Zn-Al-Mg alloy-plated steel sheet).

### (Example 23)

A composite vibration damper was produced as in Example 20 except that the constraining layer was made of a stainless steel sheet (SUS 304).

### (Example 24)

A composite vibration damper was produced as in Example 20 except that the constraining layer was made of an ED sheet (electrodeposition coating steel sheet).

The composite vibration dampers in Examples 20 to 24 were subjected to a test by spraying an NaCl solution having a concentration of 5% for 1000 hours in an atmosphere of 35°C. The results are shown in Table 5.

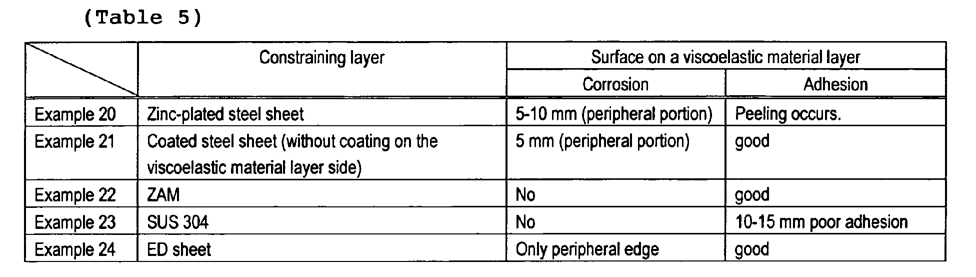

From the foregoing results, it has been found that ZAM and the ED sheet are preferable as a material used in the constraining layer.

Examples of coating a heat-shielding paint or the like on the constraining layer of the composite vibration damper in the invention are described below.

### (Example 25)

This Example is an example of not coating a heat-shielding paint on the constraining layer.

In this Example, a flexible sheet (VYNON MAGNET Sheet manufactured by C. I. Kasei, magnetization pitch 3 mm, adherent force 100 g/cm², BHmax 1.0 MGOe) with a thickness of 1.5 mm formed by mixing 88 parts by weight of anisotropic strontium ferrite as a magnetic powder with 12 parts by weight of chlorinated polyethylene as a binder material was used as a magnetic attractive layer. A partially crosslinked sheet (penetration rate 35) obtained by kneading 50 parts by weight of a butyl rubber (Exxon Butyl-268 manufactured by Nippon Butyl), 50 parts by weight of a partially crosslinked butyl rubber (WO-27 manufactured by Elastomix), 10 parts by weight of carbon (Seast S), 50 parts by weight of a tackifier (Escoretz 1102), 60 parts by weight of calcium carbonate (ground type), 240 parts by weight of calcium silicate and 100 parts by weight of a softening agent (Polybis 015MN) with a pressure kneader and forming the mixture into a sheet having a thickness of 6.0 mm by an extruder was used as a viscoelastic material layer. A zinc-plated steel sheet with a thickness of 2.0 mm to which coating or the like was not applied at all was used as a constraining layer. These layers were laminated in the order of the constraining layer, the viscoelastic material layer and the magnetic attractive layer to produce a composite vibration damper having a size of 10 mm x 210 mm. The constraining layer, the viscoelastic material layer and the magnetic attractive layer were press-bonded at room temperature.

### (Example 26)

A composite vibration damper was produced as in Example 25 except that the zinc-plated steel sheet as the constraining layer was subjected to white coating using a nitrocellulose-based paint.

### (Example 27)

A composite vibration damper was produced as in Example 25 except that the zinc-plated steel sheet as the constraining layer was subjected to silver coating using an acrylic resin-based paint.

### (Example 28)

A composite vibration damper was produced as in Example 25 except that a heat-shielding sheet was adhered to the zinc-plated steel sheet as the constraining layer.

Each of the composite vibration dampers in Examples 25 to 28 was adhered to a site to be fixed under the following conditions to measure a temperature.

A rail having a length of 500 mm and a weight of 60 kg/m was prepared as a rail sample for railway. A composite vibration damper having a width of 70 mm and a length of 615 mm was used for a body, and a composite vibration damper having a width of 50 mm and a length of 470 mm was used for a bottom.

A measuring method was as follows. A position exposed to the direct rays of the sun was selected, and the rail was installed in a vertical direction to the due south. The temperatures of the head, the body, the bottom and the atmosphere of the rail were measured with a temperature sensor. On the body and the bottom, the sensor was mounted between the surface of the rail and the composite vibration damper. The temperature was measured five times a day for a total of 5 days using a measuring device (PC-linked recorder GR-3500 manufactured by KEYENCE).

In the results of the measurement, average temperatures of the body and the bottom in Examples 26 to 28 when the temperature of the head in Example 25 was 45°C are shown in Table 6.

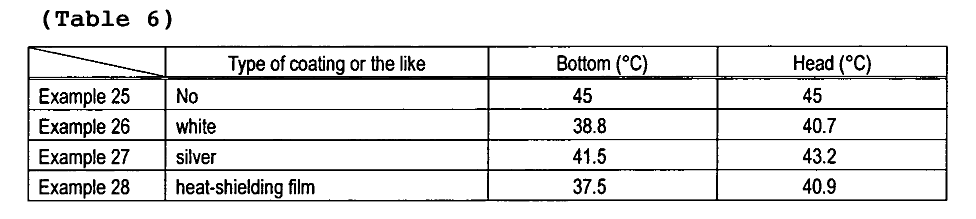

From Table 6, it has been found that in comparison to Example 25 without any coating, Examples 26 to 28 can control the increase in temperature and are effective for preventing the decrease in vibration damping effect. Further, in Examples 26 to 28, the temperature of the rail is kept low, making it possible to cut down the cost involved in maintenance and control accompanied by the increase in temperature of the rail in the railway track.

Test Examples are described below in which each of the composite vibration dampers in Examples and the vibration dampers in Comparative Examples was installed in the actual railway track and the rail vibration, the slab vibration or the noise in the surroundings was measured.

### (Example 29)

In this Example, a flexible sheet (VYNON MAGNET Sheet manufactured by C. I. Kasei, magnetization pitch 5 mm, adherent force 125 g/cm², BHmax 1.0 MGOe) with a thickness of 2.0 mm formed by mixing 88 parts by weight of anisotropic strontium ferrite as a magnetic powder with 12 parts by weight of chlorinated polyethylene as a binder material was used as a magnetic attractive layer. A partially crosslinked sheet (penetration rate 35) obtained by kneading 100 parts by weight of a partially crosslinked butyl rubber (WO-27 manufactured by Elastomix), 10 parts by weight of carbon (Seast S), 50 parts by weight of a tackifier (Escoretz 1102), 300 parts by weight of calcium carbonate (ground type), 50 parts by weight of mica (S-200) and 100 parts by weight of a softening agent (Polybis 015MN) with a pressure kneader and forming the mixture into a sheet having a thickness of 6.0 mm by an extruder was used as a viscoelastic material layer. A coated steel sheet having a thickness of 1.6 mm was used as a constraining layer. These layers were laminated in the order of the constraining layer, the viscoelastic material layer and the magnetic attractive layer to produce a composite vibration damper having a size of 70 mm x 615 mm. The constraining layer, the viscoelastic material layer and the magnetic attractive layer were press-bonded at room temperature.

The composite vibration dampers were fixed on the body and the bottom of the rail in the section at a speed of 110 km/h on a slab track between Ueno and Oomiya of the Tohoku Shinkansen.

Comparative Example 4 is an example in which the vibration damper is not installed.

With respect to the results of the measurement, an average value in each site at a measurement distance is shown in Table 7.

**(Table 7)**

| Bonding site | Sample | 200 train series | 400 train series | E1 train series | E2 train series | E3 train series | E4 train series | Average of all series |
|---|---|---|---|---|---|---|---|---|
| Rail head | Example 29 | 132 | 121 | 124 | 120 | 121 | 122 | 124 |
| | Comparative Example 4 | 140 | 127 | 125 | 126 | 125 | 134 | 134 |
| Rail body | Example 29 | 129 | 122 | 125 | 122 | 123 | 122 | 124 |
| | Comparative Example 4 | 141 | 131 | 130 | 128 | 128 | 129 | 135 |
| Rail bottom | Example 29 | 118 | 115 | 116 | 116 | 115 | 117 | 133 |
| | Comparative Example 4 | 118 | 118 | 118 | 118 | 117 | 117 | 139 |
| Slab vibration | Example 29 | 118 | 115 | 116 | 116 | 115 | 117 | 116 |
| | Comparative Example 4 | 118 | 118 | 118 | 118 | 117 | 117 | 118 |
| Near rail | Example 29 | 96 | 96 | 100 | 97 | 98 | 96 | 97 |
| | Comparative Example 4 | 104 | 98 | 100 | 98 | 98 | 97 | 100 |

From Table 7, it has been found that Example 29 exhibits the excellent vibration damping effect in the railway track. It has been also found that the effect of reducing the rolling noise is obtained by approximately 3 dB.

### Industrial Applicability

As has been thus far described, the composite vibration damper of the invention can exhibit the excellent vibration damping effect over the wide temperature range by fixing it on a member to be fixed such that the thickness of the viscoelastic material layer is set at 1 mm or more and the viscoelastic material layer is thicker than the constraining layer.

Further, in the composite vibration damper of the invention, the thickness of the viscoelastic material layer is 1 mm or more, and it is thicker than the constraining layer. Consequently, after the magnetic attractive layer of the composite vibration damper is partially fixed on a member to be fixed having a curved surface, the viscoelastic material layer laminated on the magnetic attractive layer is subjected to elastic deformation to follow the surface shape of the member to be fixed, whereby even an unfixed portion of the magnetic attractive layer is fixed on the surface of the member to be fixed by magnetic force. Accordingly, quite excellent workability is obtained without the need of bonding the composite vibration damper from the side of the constraining layer toward the direction of the member to be fixed by a strong pressure.

## Claims

1. A composite vibration damper which comprises a magnetic attractive layer, a viscoelastic material layer and a constraining layer laminated in this order and which is used by being fixed on a surface to be fixed by magnetic force of the magnetic attractive layer, **characterized in that** the thickness of the viscoelastic material layer is 1 mm or more and is greater than the thickness of the constraining layer.

2. The composite vibration damper according to claim 1, **characterized in that** the magnetic attractive layer is a flexible magnetic attractive layer which is multipole magnetized and has adherent force of 50 g/cm² or more to the surface to be fixed.

3. The composite vibration damper according to claim 1, **characterized in that** the thickness of the viscoelastic material layer is from 2 to 10 times that of the constraining layer.

4. The composite vibration damper according to claim 1, **characterized in that** the constraining layer is made of any of a metallic sheet such as a steel sheet, a coated steel sheet, a plated steel sheet, a stainless steel sheet or an aluminum sheet and the like, a ceramic sheet having Young's modulus of 300 Pa or more, a synthetic resin sheet having Young's modulus of 300 Pa or more and other composite materials such as a laminate steel sheet having Young's modulus of 300 Pa or more, and the thickness thereof is from 50 µm to 18,000 µm.

5. The composite vibration damper according to claim 1, **characterized in that** the maximum energy product (BHmax) of the magnetic attractive layer is 0.7 MGOe or more.

6. The composite vibration damper according to claim 1, **characterized in that** the viscoelastic material layer is made of a non-crosslinked or partially crosslinked butyl rubber having viscosity, and its thickness is from 1.5 mm to 25 mm.

7. The composite vibration damper according to claim 6, **characterized in that** an acicular filler is incorporated into the butyl rubber.

8. The composite vibration damper according to claim 6, **characterized in that** the magnetic attractive layer, the viscoelastic material layer and the constraining layer are bonded to one another by self-adhesion of the viscoelastic material layer.

9. The composite vibration damper according to claim 1, **characterized in that** a heat-shielding film is adhered to, or a heat-shielding paint is coated on, the outer surface side of the constraining layer of the composite vibration damper.

10. The composite vibration damper according to claim 1, **characterized in that** the composite vibration damper is used in a vehicle-related structure.

11. The composite vibration damper according to claim 1, **characterized in that** the composite vibration damper is used in a rail for railway.
